(19) **Europäisches Patentamt**

**European Patent Office**

**Office européen des brevets**

(11) **EP 0 762 269 B1**

(12) **EUROPÄISCHE PATENTSCHRIFT**

(45) Veröffentlichungstag und Bekanntmachung des Hinweises auf die Patenterteilung:
**11.12.2002   Patentblatt 2002/50**

(51) Int Cl.[7]: **G06F 7/548**, G01C 21/20

(21) Anmeldenummer: **96112646.3**

(22) Anmeldetag: **06.08.1996**

(54) **Verfahren zur Transformation von UTM-Koordinaten**

Transformation method of UTM coordinates

Méthode de transformation des coordonnées UTM

(84) Benannte Vertragsstaaten:
**DE FR GB NL**

(30) Priorität: **22.08.1995   DE 19530803**

(43) Veröffentlichungstag der Anmeldung:
**12.03.1997   Patentblatt 1997/11**

(73) Patentinhaber: **EADS Deutschland GmbH**
**81663 München (DE)**

(72) Erfinder: **Schrodi, Wolfgang, Dr. rer. nat.**
**89075 Ulm (DE)**

(74) Vertreter: **Meel, Thomas et al**
**Patentassessor,**
**c/o Dornier GmbH**
**L H G**
**88039 Friedrichshafen (DE)**

(56) Entgegenhaltungen:
**EP-A- 0 382 592          DE-A- 4 235 285**

• **BULLETIN GEODESIQUE, Bd. 60, Nr. 4, April 1986, FRANCE, Seiten 345-354, XP000195818 B. R. BOWRING: "THE LAMBERT CONICAL ORTHOMORPHIC PROJECTION AND COMPUTATIONAL STABILITY"**

Anmerkung: Innerhalb von neun Monaten nach der Bekanntmachung des Hinweises auf die Erteilung des europäischen Patents  kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Einstellung eines Stellgliedes nach dem Oberbegriff des Patentanspruchs 1.

In vielen Anwendungsgebieten der Technik, beispielsweise der Navigation, der Landvermessung sowie der Kartographie, ist es erforderlich, ein technisches Gerät, z.B. ein Fernrohr oder einen Laser-Entfernungsmesser mittels auf der Erdoberfläche üblicher Koordinaten auf ein Ziel auszurichten. Derartige technische Geräte werden im folgenden Stellglieder genannt, da der Gegenstand der Erfindung auf steuerungs- und/oder regelungstechnische Aufgabenbereiche anwendbar ist. Derartige Stellglieder werden z.B. manuell mittels Stellschrauben sowie Anzeigeskalen oder alternativ zusätzlich mittels Stellmotoren, z.B. sogenannte Schrittmotoren, eingestellt.

Auf der Erdoberfläche sind für Koordinatenangaben mehrere Koordinatensysteme derzeit üblich, beispielsweise das ebene UTM-Koordinatensystem (("Universales Transversales Mercator Koordinatensystem") und das ellipsoidale (geographische) Koordinatensystem, bei welchem Koordinaten eines Ortes in Längen- sowie Breitengradangaben (Altgrad) erfolgen. In vielen Anwendungsfällen ist es erforderlich, die Koordinaten eines Koordinatensystems in diejenigen des anderen umzuwandeln. Dieses erfolgt z.B. mittels sogenannter Koordinatenwandler.

Bei der Satellitennavigation (Navigation mittels mehrerer die Erde umkreisender Satelliten) ist es zweckmäßig, geozentrische kartesische (rechtwinklige, dreidimensionale) Koordinaten zu verwenden. Dabei liegt der Koordinatenursprung im Schwerpunkt der Erde, die Z-Achse entspricht der mittleren Rotationsachse der Erde. Die mittlere Äquatorebene steht senkrecht auf der Z-Achse und enthält ebenfalls den Koordinatenursprung. In der Äquatorebene, in Richtung des astronomischen Nullmeridians (Meridian von Greenwich) liegt die X-Achse und senkrecht dazu, nach Osten weisend, die Y-Achse.

Für diese verschiedenen Koordinatensysteme gibt es Koordinaten-Transformationsverfahren, mit denen beispielsweise Koordinatenwandler herstellbar sind.

Bei vielen auf der Erdoberfläche verwendeten Koordinatensystemen ist die Waagerechte wichtig, das heißt, eine senkrecht zur Richtung der (ortsabhängigen) Schwerkraft liegende Niveaufläche. Die in Meereshöhe liegende Niveaufläche (Fläche konstanten Schwerkraftpotentials), die man sich auch auf dem Festland (Kontinenten) fortgesetzt denken kann, wird Geoid genannt. Der orthogonale Abstand von dem Geoid wird als Höhe $h_{NN}$ über Normal-Null (NN) bezeichnet.

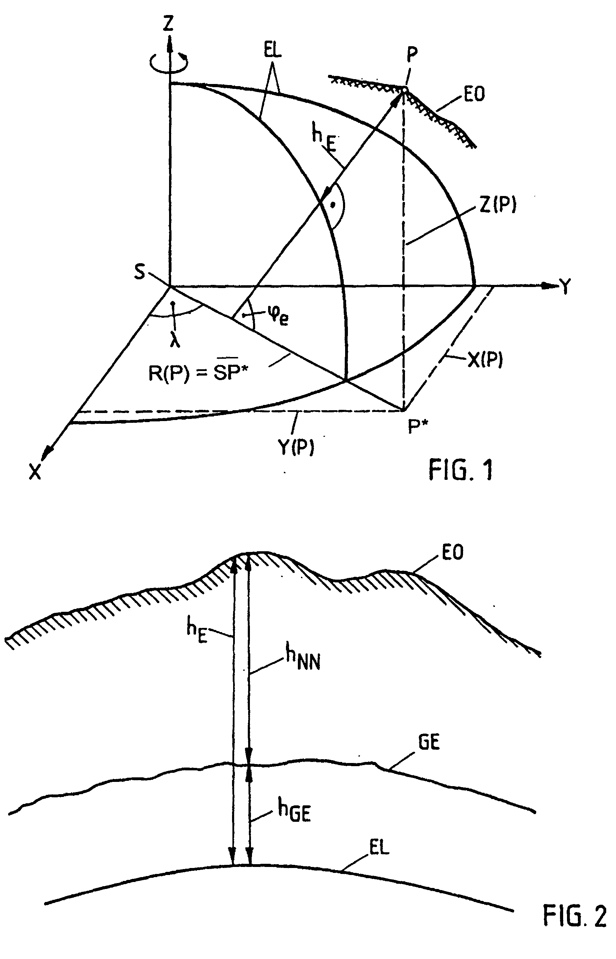

Das Geoid wird global üblicherweise durch ein möglichst gut angepaßtes Rotationsellipsoid beschrieben, dessen Mittelpunkt mit dem Erdschwerpunkt identisch ist. Infolge der fortlaufenden Verbesserung der Meßmethoden werden die Parameter dieses Rotationsellipsoides immer wieder aktualisiert. Das zur Zeit beste globale Ellipsoid ist das "World Geodetic System 84" (WGS84), wobei jedoch auch die Ellipsoide nach Hayford und nach Bessel weit verbreitet sind. Der orthogonale Abstand von dem Ellipsoid wird als ellipsoidale Höhe $h_E$ bezeichnet (Fig. 1, Fig. 2).

Die Differenz zwischen $h_E$ und $h_{NN}$ wird als Geoidhöhe $h_{GE}$ oder auch Geoidundulation bezeichnet (Fig. 2). Die Geoidhöhe $h_{GE}$ kann nicht allgemein berechnet werden, sondern muß Tabellen- und/oder Kartenwerken entnommen werden.

Die ellipsoidale Höhe $h_E$ kann man beispielsweise aus geozentrischen kartesischen Koordinaten mittels Koordinatentransformation bestimmen.

Derartige Koordinaten-Transformationsverfahren benötigen in nachteiliger Weise einen hohen Rechenaufwand, insbesondere dann, wenn eine hohe Wandlungsgenauigkeit benötigt wird.

Der Erfindung liegt die Aufgabe zugrunde, ein gattungsgemäßes Verfahren anzugeben, das insbesondere in einem Koordinatenwandler verwendbar ist und mit dem genau, schnell und kostengünstig geozentrische, kartesische Koordinaten in geographische (ellipsoidale) Koordinaten umwandelbar sind.

Diese Aufgabe wird gelöst durch die im kennzeichnenden Teil des Patentanspruchs 1 angegebenen Merkmale. Vorteilhafte Ausgestaltungen und/oder Weiterbildungen sind den weiteren Ansprüchen entnehmbar.

Ein erster Vorteil der Erfindung besteht darin, daß die Koordinatenwandlung (Koordinatentransformation) mittels eines geschlossenen algebraischen Ausdrucks erfolgt. Ansonsten übliche Iterationsverfahren werden nicht benötigt. Dadurch sind vorteilhafterweise einfach sowie schnell arbeitende Koordinatenwandler einsetzbar. Diese sind derzeit im allgemeinen als Datenverarbeitungsanlage ausgebildet und/oder in einer solchen implementiert.

Ein zweiter Vorteil besteht darin, daß bei der Koordinatenwandlung keine trigonometrische Funktionen und ansonsten lediglich die Arcustangens-Funktion verwendet wird. Dadurch können einfach aufgebaute Koordinatenwandler verwendet werden, welche schnell arbeiten, so daß Echtzeitanwendungen möglich sind.

Ein dritter Vorteil besteht darin, daß bei der Koordinatenwandlung lediglich Potenzierungs-, Multiplikationssowie Summationsoperationen und teilweise eine Arcustangens-Auswertung benötigt werden. Diese sind selbst mit kostengünstigen Datenverarbeitungsanlagen, z.B. programmierbaren Taschenrechnern, schnell durchführbar und nahezu in jeder Datenverarbeitungsanlage vorhanden, also unabhängig von einer speziellen Programmiersprache. Außerdem ist es möglich, aus derzeit üblichen elektronischen Bauelementen (Summier- und Multiplizierglieder) extrem schnelle Koordinatenwandler aufzubauen, z.B. in derzeit üblicher GaAs-Technologie.

Ein vierter Vorteil besteht darin, daß die für die Koordinatenwandlung benötigte (Wandlungs-)Zeit von der geforderten, vorgebbaren (Wandlungs-)Genauigkeit abhängt. Dadurch können bei geringerer Genauigkeit sehr schnell arbeitende Koordinatenwandler hergestellt werden.

Ein fünfter Vorteil besteht darin, daß die bei der Koordinatenwandlung auftretenden Koeffizienten nur von den das Erdellipsoid bestimmenden Parametern abhängen. Diese Koeffizienten sind daher schnell und zuverlässig änderbar, sofern ein Wechsel des Ellipsoids vorgenommen wird. Diese Koeffizienten sind für ein vorgebbares Ellipsoid konstante Zahlen.

Weitere Vorteile ergeben sich aus der nachfolgenden Beschreibung.

In dem erwähnten geozentrischen kartesischen Koordinatensystem werden für die dreidimensionale Koordinatenangabe eines Ortes dessen X-,Y-,Z-Koordinaten verwendet, die beispielsweise durch die erwähnte Satellitennavigation ermittelt werden. Diesen entsprechen im geographischen System die geographischen (ellipsoidalen) Koordinaten $\lambda$, $\varphi_e$, $h_E$.

Fig.1 zeigt eine schematische Darstellung zur Erläuterung der Zusammenhänge zwischen den geozentrischen kartesischen und den geographischen Koordinaten eines Ortes P. In Fig.1 ist die Erdoberfläche EO dargestellt, auf welcher sich der Ort P befindet. Dieser hat im geozentrischen kartesischen Koordinatensystem X, Y, Z, dessen Koordinatenursprung S mit dem Schwerpunkt der Erde identisch ist, die Koordinaten X(P), Y(P), Z(P). Bezüglich des geographischen Koordinatensystems, welches auf einem Rotationsellipsoid EL, beispielsweise dem WGS84-Ellipsoid, beruht, hat der Ort P die geographischen Koordinaten: Länge $\lambda$, Breite $\varphi_e$, (ellipsoidische) Höhe $h_E$, welche den Abstand des Ortes P von der Oberfläche des Rotationsellipsoides EL angibt.

Fig.2 zeigt eine schematische Darstellung der Erdoberfläche EO, das Geoid GE sowie ein dieses annäherndes Rotationsellipsoid EL. Aus Fig.2 ist ersichtlich, daß sich die Höhe $h_E$ berechnet gemäß der Formel $h_E = h_{NN} + h_{GE}$, wobei $h_{NN}$ die Meereshöhe und $h_{GE}$ die Geoidhöhe (Geoidundulation) bedeuten.

Für den Ort P berechnet sich dessen geographische Länge $\lambda$ gemäß der Formel

$$\lambda = \arctan\left(\frac{Y(P)}{X(P)}\right), \ \text{mit} \ -\pi \le \lambda \le +\pi \qquad (1).$$

Für die ellipsoidale Höhe $h_E$ gilt die Formel

$$h_E = \frac{R(P)}{\cos(\varphi_e)} - \frac{a}{\sqrt{1 - e_1^2 \cdot \sin^2(\varphi_e)}} \qquad (2).$$

An den beiden Polen ist die geographische Länge unbestimmt, und die ellipsoidale Höhe ergibt sich zu

$$h_E = |Z(P)| - a\sqrt{1 - e_1^2}.$$

Die ellipsoidale, geographische Breite $\varphi_e$ berechnet sich gemäß der Formel

$$\tan(\varphi_e) = Z(P) / \left[ R(P) \cdot \left( 1 - \frac{e_1^2 \cdot a}{a + h_E \cdot \sqrt{1 - e_1^2 \cdot \sin^2(\varphi_e)}} \right) \right] \qquad (3)$$

mit $R(P) = \sqrt{X^2(P) + Y^2(P)}$, bzw. $R(P) = \frac{X(P)}{\cos(\lambda)}$ oder $R(P) = \frac{Y(P)}{\sin(\lambda)}$.

Dabei bezeichnen R(P) die Entfernung von dem Schwerpunkt (Koordinatenursprung) S zur senkrechten Projektion des Ortes P auf die Äquatorebene und $e_1$ die erste Exzentrizität des Rotationsellipsoides, beispielsweise entsprechend dem WGS84 - Ellipsoid. Dabei gilt

$$e_1 = \frac{\sqrt{a^2 - b^2}}{a},$$

mit

a = große Halbachse des Erdellipsoides und

b = kleine Halbachse des Erdellipsoides.

Diese exakten Transformationsgleichungen (1) bis (3) enthalten die Abhängigkeiten $h_E$ von $\varphi_e$ (G1.(2)) sowie $\varphi_e$ von $h_E$ und $\varphi_e$ (G1.(3)) und sind daher in nachteiliger Weise lediglich durch rechen- sowie zeitaufwendige Verfahren lösbar. Außerdem werden trigonometrische Funktionen (sin, tan) verwendet, die zusätzliche Rechenzeit erfordern.

Bei dem nachfolgend beschriebenen Verfahren werden zwar lediglich Näherungen verwendet, die aber für viele Anwendungsfälle eine genügende (Wandlungs-)Genauigkeit liefern und vorteilhafterweise wesentlich einfachere Rechenoperationen benötigen und damit weniger Rechenzeit (Wandlungszeit) erfordern, so daß Echtzeitanwendungen möglich sind, z.B. mittels schneller Koordinatenwandler, die in GaAs-Technologie aufgebaut sind.

Wird lediglich eine sehr grobe (ungenaue) Näherung benötigt, so kann die Erde als Kugel ($e_1$= 0) betrachtet werden, und aus der Formel (3) ergibt sich die Näherung

$$\tan(\varphi_e) = Z(P)/R(P) \tag{3a}.$$

Bei der Erfindung wird dagegen eine wesentlich genauere Näherung verwendet, die nachfolgend erläutert wird.

Ersetzt man in Formel (3) das dortige $h_E$ durch die Formel (2) und die dortige sin-Funktion, mittels einer trigonometrischen Umformung, durch eine tan-Funktion, so ergibt sich eine Bestimmungsgleichung für die Breite $\varphi_e$ gemäß folgender Formel:

$$(1-e_1^2){\cdot}R^2(P){\cdot}\tan^4(\varphi_e)-2{\cdot}(1-e_1^2){\cdot}R(P){\cdot}Z(P){\cdot}\tan^3(\varphi_e)+$$

$$\{R^2(P)+(1-e_1^2){\cdot}Z^2(P)-a^2{\cdot}e_1^4\}{\cdot}\tan^2(\varphi_e)-2{\cdot}R(P){\cdot}Z(P){\cdot}\tan(\varphi_e)+Z^2(P) = 0 \tag{4}.$$

Diese Bestimmungsgleichung ist lösbar mittels einer normierten Gleichung (führender Koeffizient $a_4$=1), wobei für die weiteren Koeffizienten $a_3$, $a_2$, $a_1$, $a_0$ folgende Formeln gelten:

$$a_3 = -2{\cdot}Z(P)/R(P) ,$$

$$a_2 = \frac{1}{1-e_1^2} + Z^2(P)/R^2(P) - \frac{a^2 \cdot e_1^4}{(1-e_1^2){\cdot}R^2(P)} ,$$

$$a_1 = -2{\cdot}\frac{Z(P)}{(1-e_1^2){\cdot}R(P)} ,$$

$$a_0 = \frac{Z^2(P)}{(1-e_1^2){\cdot}R^2(P)} .$$

Mit diesen Koeffizienten erhält man die Lösung der Bestimmungsgleichung (4) für $\varphi_e$ mit Hilfe der Lösung w der kubischen Gleichung

$$8 \cdot w^3 - 4 \cdot \left[ \frac{1}{1-e_1^2} + \frac{Z^2(P)}{R^2(P)} - \frac{a^2 \cdot e_1^4}{(1-e_1^2) \cdot R^2(P)} \right] \cdot w^2 - 4 \cdot \frac{Z^2(P) \cdot a^2 \cdot e_1^4}{(1-e_1^2)^2 \cdot R^4(P)} = 0 .$$

Für diese Gleichung ergibt sich die einzig existente reelle Lösung w zu w = u + v + $a_2$/6 mit

$$u = (-q + \sqrt{q^2 + p^3})^{1/3}$$

und

$$\nu = (-q - \sqrt{q^2 + p^3})^{1/3} \, ,$$

wobei gilt

$$p \approx -\frac{a_2^2}{36} \approx -\left( \frac{R^2(P) + \left(1 - e_1^2\right) \cdot Z^2(P) - a^2 \cdot e_1^4}{6 \cdot \left(1 - e_1^2\right) \cdot R^2(P)} \right)^2$$

und

$$q = -\frac{a_2^3}{216} - \frac{a^2 \cdot e_1^4 \cdot Z^2(P)}{4 \cdot \left(1 - e_1^2\right)^2 \cdot R^4(P)} \approx -\left( \frac{R^2(P) + \left(1 - e_1^2\right) \cdot Z^2(P) - a^2 \cdot e_1^4}{6 \cdot \left(1 - e_1^2\right) \cdot R^2(P)} \right)^3 - \frac{Z^2(P) \cdot a^2 \cdot e_1^4}{4 \cdot \left(1 - e_1^2\right)^2 \cdot R^4(P)} \, .$$

Mit dieser Lösung w und der Abkürzung A mit

$$A = \pm \sqrt{8 \cdot w + a_3^2 - 4 \cdot a_2}$$

muß zum Abschluß noch die Formel

$$\tan^2(\varphi_e) + (a_3 + A) \cdot 0{,}5 \cdot \tan(\varphi_e) + [w + (a_3 \cdot w - a_1)/A] = 0 \tag{4a}$$

mit Hilfe der sogenannten Mitternachtsformel gelöst werden.

Die exakte Lösung $\tan(\varphi_e)$ kann nun erstaunlich gut angenähert werden durch die folgenden Näherungsgleichungen (5) und (6), die einen wesentlich geringeren Rechenaufwand erfordert, aber gleichzeitig eine hohe Genauigkeit liefert. Die geographische Breite $\varphi_e$ wird also vorteilhafterweise bestimmt aus der Näherungsformel

$$\tan(\varphi_e) \approx \frac{Z(P)}{R(P) \cdot \left(1 - e_1^2\right)} \cdot \left( 1 - \frac{h_E \cdot e_1^2}{a \cdot \left(1 - e_1^2\right)} \right) \tag{5} .$$

In dieser Formel (5) wird die ellipsoidale Höhe $h_E$ benötigt, die aber in überraschender Weise mit einem Fehler kleiner gleich 2 ‰ bestimmt wird gemäß der Formel

$$h_E \approx \sqrt{\left(1-e_1^2\right)\cdot R^2(P)+\frac{Z^2(P)}{1-e_1^2}} \cdot \left[1-\frac{a}{\sqrt{R^2(P)+\frac{Z^2(P)}{1-e_1^2}}}\right] \qquad (6) \quad .$$

Diese Gleichung ergibt sich aus einer Mittelung aus der Formel (2) und der Formel

$$h_E = \frac{Z(P)}{\sin(\varphi_e)} - \frac{a\cdot(1-e_1^2)}{\sqrt{1-e_1^2\cdot\sin^2(\varphi_e)}} \qquad (5a),$$

sowie der Näherung

$$\tan(\varphi_e) \approx \frac{Z(P)}{R(P)\cdot(1-e_1^2)} \qquad (6a).$$

Die Abweichung der mit dieser Formel bestimmten geographischen Breite $\varphi_e$ von dem exakten Wert ist bei $\varphi_e = 45°$ maximal und ansonsten deutlich niedriger als der Genauigkeitswert 0,193° beziehungsweise für Höhen $h_E$ kleiner als 6400 km der Genauigkeitswert $3\cdot h_E\cdot 10^{-8}$ Altgrad/m.

Die Formeln (2), (5a), und (6a) sowie Vorläufer der Formel (3) finden sich u.a. in der Spezialliteratur Jordan/Eggert/Kneißl, Handbuch der Vermessungskunde, Band IV, Mathematische Geodäsie (Landvermessung), 10. Ausgabe, J.B. Metzlersche Verlagsbuchhandlung Stuttgart, 1959

Mit der so bestimmten Breite $\varphi_e$ kann bedarfsweise aus der Formel (2) die ellipsoidale Höhe $h_E$ ($h_E = h_{NN} + h_{GE}$) noch genauer ermittelt werden. Setzt man dieses Ergebnis in die Formel (3) ein, so erhält man auch einen noch genaueren Wert für die geographische Breite $\varphi_e$.

Mit dem beschriebenen Verfahren (Formeln (5) und (6)) kann beispielsweise bei einer im allgemeinen ausreichenden Genauigkeit ($\Delta\varphi_e$ im Bereich von $10^{-3}$ Bogensekunden, $\Delta h_E$ kleiner gleich 2 ‰) eine sehr schnelle Wandlungszeit, z.B. ungefähr 20 msec bei einer Taktrate von ungefähr 16 MHz, erreicht werden, die für viele Echtzeitanwendungen, z.B. in Koordinatenwandlern, ausreichend ist.

Durch geeignete Reihenentwicklungen, die entweder auf den Näherungsformeln (5) bis (6a) oder direkt auf dem algebraischen Ausdruck aus Gl. (4) beruhen, lassen sich sehr effiziente Näherungsformeln mit frei vorgebbarer Genauigkeit ableiten, die ausschließlich Multiplikationen und Additionen, sowie eventuell nur eine einzige Division benutzen.

Zum Beispiel kann die Funktion $\tan(\varphi_e)$ als gebrochen rationale Funktion von R(P) und Z(P) ermittelt werden gemäß der Formel

$$\tan(\varphi_e) = \frac{\sum\limits_{\nu,\mu,\kappa} a_{\nu\mu\kappa}\cdot R^\nu(P)\cdot Z^\mu(P)\cdot V^\kappa(P)}{\sum\limits_{\nu,\mu,\kappa} b_{\nu\mu\kappa}\cdot R^\nu(P)\cdot Z^\mu(P)\cdot V^\kappa(P)} \quad ,$$

mit V(P) = R(P)/Z(P) und $a_{\nu\mu\kappa}$, $b_{\nu\mu\kappa}$ konstante Koeffizienten für ein vorgebbares Erdellipsoid, die lediglich von dessen erster Exzentrizität $e_1$ und dessen großer Halbachse a abhängen,

wobei die Anzahl der Koeffizienten in Abhängigkeit von der geforderten Genauigkeit festgelegt wird und
und die ellipsoidale Höhe $h_E$ ermittelt wird gemäß der Formel

$$h_E = \sum_{\nu} c_{\nu}(R(P), Z(P)) \cdot \varphi_e^{\nu} \quad ,$$

wobei $c_{\nu}$ Koeffizienten sind, die in Abhängigkeit von R(P), Z(P), $e_1$ und a ermittelt werden.

Alternativ kann die geographische Breite $\varphi_e$ als gebrochen rationale Funktion von R(P) und Z(P) ermittelt werden gemäß der Formel

$$\varphi_e = \frac{\sum\limits_{\nu,\mu,\kappa} \tilde{a}_{\nu\mu\kappa} \cdot R^{\nu}(P) \cdot Z^{\mu}(P) \cdot V^{\kappa}(P)}{\sum\limits_{\nu,\mu,\kappa} \tilde{b}_{\nu\mu\kappa} \cdot R^{\nu}(P) \cdot Z^{\mu}(P) \cdot V^{\kappa}(P)} \quad ,$$

mit V(P) = R(P)/Z(P) und $\tilde{a}_{\nu\mu\kappa}, \tilde{b}_{\nu\mu\kappa}$ konstante Koeffizienten für ein vorgebbares Erdellipsoid, die lediglich von dessen erster Exzentrizität $e_1$ und dessen großer Halbachse a abhängen,

wobei die Anzahl der Koeffizienten in Abhängigkeit von der geforderten Genauigkeit festgelegt wird und

und die ellipsoidale Höhe $h_E$ ermittelt wird gemäß der Formel

$$h_E = \sum_{\nu} c_{\nu}(R(P), Z(P)) \cdot \varphi_e^{\nu} \quad ,$$

wobei $c_{\nu}$ Koeffizienten sind, die in Abhängigkeit von R(P), Z(P), $e_1$ und a ermittelt werden.

Die Erfindung ist nicht auf die beschriebenen Beispiele beschränkt, sondern sinngemäß auf weitere anwendbar, beispielsweise

- auf die Satellitentechnologie im allgemeinen, denn dort müssen beispielsweise die Positionen der Satelliten bekannt sein, so daß sowohl Satellitenbetreiber als auch Satellitennutzer ihre Sende- und/oder Empfangsantennen genau ausrichten können;

- auf die Navigation im allgemeinen, z.B. die Satellitennavigation, beispielsweise von Flugzeugen oder Schiffen, denn diese müssen sowohl ihre eigene Position, z.B. gemäß dem GPS-System als auch gegenüber Bojen oder Landmarken genau bestimmen können;

- auf die Luftraumüberwachung, denn dort müssen beispielsweise von einer ortsfesten Bodenstation die Positionen der in zugehörigen Luftraum befindlichen Flugzeuge bestimmt werden;

- auf das Vermessungswesen (Geodäsie);

- auf die Wettervorhersage, beispielsweise zur schnellen und genauen Bestimmung der Orte und/oder Zugrichtung von Wolken oder Sturmgebieten, z.B. Hurrikanen;

- auf Navigationsanwendungen in militärischen Bereich, beispielsweise in der sogenannten Feuerleitung, z.B. von Geschützen, die schnell und genau auf ein Ziel, dessen Position bekannt ist, ausgerichtet werden müssen.

**Patentansprüche**

1. Verfahren zur Einstellung eines Stellgliedes mittels einer Steuer- und/oder Regeleinrichtung, die zur Sollwerteinstellung Koordinaten benötigt, die als geographische Koordinaten ($\lambda$, $\varphi_e$, $h_E$) vorliegen, wobei für einen Ort (P) gilt:

$\lambda$ = geographische Länge des Ortes,
$\varphi_e$ = ellipsoidische geographische Breite des Ortes,
$h_E$ = ellipsoidale Höhe des Ortes, mit $h_E$ = $h_{NN}$ + $h_{GE}$, wobei

$h_{NN}$= Meereshöhe und
$h_{GE}$= Geoidhöhe (Geoidundulation) für den Ort,

wobei im Falle, dass Koordinaten als geozentrische kartesische Koordinaten (X(P), Y(P), Z(P)) des Ortes (P) vorliegen, daraus die zugehörigen geographischen Koordinaten ($\lambda$, $\varphi_e$, $h_E$) bestimmt werden gemäß den Formeln

$$\lambda = \arctan\left(\frac{Y(P)}{X(P)}\right) ,$$

mit $-\pi \leq \lambda \leq +\pi$ ;
**dadurch gekennzeichnet,**
**daß** die ellipsoidale Höhe $h_E$ und die geographische Breite $\varphi_e$ berechnet werden nach den Näherungsformeln

$$h_E \approx \sqrt{(1-e_1^2)\cdot R^2(P)+\frac{Z^2(P)}{1-e_1^2}} \cdot \left[1-\frac{a}{\sqrt{R^2(P)+\frac{Z^2(P)}{1-e_1^2}}}\right] ;$$

$$\varphi_e \approx \arctan\left[\frac{Z(P)}{R(P)\cdot(1-e_1^2)}\cdot\left(1-\frac{h_E\cdot e_1^2}{a\cdot(1-e_1^2)}\right)\right]$$

mit

R(P) = Entfernung vom Koordinatenursprung (S) zur senkrechten Projektion des Ortes (P) auf die Äquatorial-ebene,

$$e_1 = \frac{\sqrt{a^2 - b^2}}{a} = \text{erste Exzentrizität des verwendeten Erdellip-soides,}$$

a = große Halbachse des Erdellipsoides und
b = kleine Halbachse des Erdellipsoides.

2. Verfahren nach Anspruch 1, **dadurch gekennzeichnet, daß** für eine Koordinatentransformation zunächst die geographische Breite ($\varphi_e$) des Ortes (P) ermittelt wird aus der Näherungsformel

$$\tan(\varphi_e) \approx \frac{Z(P)}{R(P)\cdot(1-e_1^2)} ,$$

mit $R(P) = \sqrt{X^2(P) + Y^2(P)}$ , bzw. $R(P) = \frac{X(P)}{\cos(\lambda)}$ oder $R(P) = \frac{Y(P)}{\sin(\lambda)}$ , daß mit dieser geographischen Breite ($\varphi_e$) anschließend die ellipsoidale Höhe ($h_E$) des Ortes (P) bestimmt wird aus der Formel

$$h_E = \frac{R(P)}{\cos(\varphi_e)} - \frac{a}{\sqrt{1 - e_1^2\cdot\sin^2(\varphi_e)}} ,$$

und
daß mit der aus dieser Formel bestimmten Höhe ($h_E$) die genauere Breite ($\varphi_e$) ermittelt wird aus der Formel

$$\tan(\varphi_e) = Z(P) / \left[ R(P) \cdot \left( 1 - \frac{e_1^2 \cdot a}{a + h_E \cdot \sqrt{1 - e_1^2 \cdot \sin^2(\varphi_e)}} \right) \right] \quad .$$

3. Verfahren nach einem der vorhergehenden Ansprüche, **dadurch gekennzeichnet, daß** bei einer Genauigkeitsanforderung von 0,193° an die geographische Breite ($\varphi_e$) beziehungsweise für Höhen $h_E$ kleiner als 6400 km und einer Genauigkeitsforderung an $\varphi_e$ von ungefähr $3 \cdot h_E \cdot 10^{-8}$ Altgrad/m die Breite $\varphi_e$ ermittelt wird nach der Näherungsformel

$$\varphi_e \approx \arctan\left( \frac{Z(P)}{R(P) \cdot (1 - e_1^2)} \right) \quad .$$

4. Verfahren nach einem der vorhergehenden Ansprüche, **dadurch gekennzeichnet,**

   - **daß** die Funktion $\tan(\varphi_e)$ als gebrochen rationale Funktion von R(P) und Z(P) ermittelt wird gemäß der Formel

$$\tan(\varphi_e) = \frac{\sum_{\nu,\mu,\kappa} a_{\nu\mu\kappa} \cdot R^\nu(P) \cdot Z^\mu(P) \cdot V^\kappa(P)}{\sum_{\nu,\mu,\kappa} b_{\nu\mu\kappa} \cdot R^\nu(P) \cdot Z^\mu(P) \cdot V^\kappa(P)} \quad ,$$

   mit V(P) = R(P)/Z(P) und $a_{\nu\mu\kappa}$, $b_{\nu\mu\kappa}$ konstante Koeffizienten für ein vorgebbares Erdellipsoid, die lediglich von dessen erster Exzentrizität $e_1$ und dessen großer Halbachse a abhängen,

   - **daß** die Anzahl der Koeffizienten in Abhängigkeit von der geforderten Genauigkeit festgelegt wird und

   - **daß** die ellipsoidale Höhe $h_E$ ermittelt wird gemäß der Formel

$$h_E = \sum_\nu c_\nu(R(P), Z(P)) \cdot \varphi_e^\nu \quad ,$$

   wobei $c_\nu$ Koeffizienten sind, die in Abhängigkeit von R(P), Z(P), $e_1$ und a ermittelt werden.

5. Verfahren nach einem der vorhergehenden Ansprüche, **dadurch gekennzeichnet,**

   - **daß** die geographische Breite $\varphi_e$ als gebrochen rationale Funktion von R(P) und Z(P) ermittelt wird gemäß der Formel

$$\varphi_e = \frac{\sum_{\nu,\mu,\kappa} \tilde{a}_{\nu\mu\kappa} \cdot R^{\nu}(P) \cdot Z^{\mu}(P) \cdot V^{\kappa}(P)}{\sum_{\nu,\mu,\kappa} \tilde{\tilde{b}}_{\nu\mu\kappa} \cdot R^{\nu}(P) \cdot Z^{\mu}(P) \cdot V^{\kappa}(P)} \quad,$$

mit $V(P) = R(P)/Z(P)$ und $\tilde{a}_{\nu\mu\kappa}$, $\tilde{\tilde{b}}_{\nu\mu\kappa}$ konstante Koeffizienten für ein vorgebbares Erdellipsoid, die lediglich von dessen erster Exzentrizität $e_1$ und dessen großer Halbachse a abhängen,

- **daß** die Anzahl der Koeffizienten in Abhängigkeit von der geforderten Genauigkeit festgelegt wird und

- **daß** die ellipsoidale Höhe $h_E$ ermittelt wird gemäß der Formel

$$h_E = \sum_{\nu} c_{\nu}(R(P), Z(P)) \cdot \varphi_e^{\nu} \quad,$$

wobei $c_\nu$ Koeffizienten sind, die in Abhängigkeit von $R(P)$, $Z(P)$, $e_1$ und a ermittelt werden.

6. Verfahren nach einem der vorhergehenden Ansprüche, **dadurch gekennzeichnet, daß** die Berechnung der auftretenden Polynome mit Hilfe des Horner-Schemas erfolgt.

7. Verfahren nach einem der vorhergehenden Ansprüche zur Verwendung als Koordinatenwandler.

8. Verfahren nach einem der vorhergehenden Ansprüche zur Verwendung als dreidimensionaler (3D-) Koordinatenwandler.

**Claims**

1. Method for setting an actuator by means of a control and/or regulating device which requires for setting the desired value coordinates which are present as geographical coordinates ($\lambda$, $\varphi_e$, $h_E$), the following holding for a location (P):

   $\lambda$ = geographical longitude of the location,
   $\varphi_e$ = ellipsoidic geographical latitude of the location,
   $h_E$ = ellipsoidal elevation of the location, where
   $h_E = h_{NN} + h_{GE}$, in which case
   $h_{NN}$ = sea level, and
   $h_{GE}$ = geoid height (geoid undulation) for the location,

   in which case if the coordinates are present as geocentric Cartesian coordinates ($X(P)$, $Y(P)$, $Z(P)$) of the location (P), the associated geographical coordinates ($\lambda$, $\varphi_e$, $h_E$) are determined in accordance with the formula

$$\lambda = \arctan\left(\frac{Y(P)}{X(P)}\right),$$

   where $-\pi \leq \lambda \leq +\pi$ ;
   **characterized in that** the ellipsoidal height $h_E$ and the geographical latitude $\varphi_e$ are calculated using the approximate formulae

**EP 0 762 269 B1**

$$h_E \approx \sqrt{(1-e_1^2)\cdot R^2(P) + \frac{Z^2(P)}{1-e_1^2}} \cdot \left[1 - \frac{a}{\sqrt{R^2(P) + \frac{Z^2(P)}{1-e_1^2}}}\right] \; ;$$

$$\varphi_e \approx \arctan\left[\frac{Z(P)}{R(P)\cdot(1-e_1^2)}\cdot\left(1 - \frac{h_E\cdot e_1^2}{a\cdot(1-e_1^2)}\right)\right]$$

where

    R(P) = distance of the origin (S) of coordinates from the perpendicular projection of the location (P) on to the equatorial plane,

$$e_1 = \frac{\sqrt{a^2 - b^2}}{a} = \text{first eccentricity of the Earth's}$$

ellipsoid used,

    a = semimajor axis of the Earth's ellipsoid and
    b = semiminor axis of the Earth's ellipsoid.

2. Method according to Claim 1, **characterized in that** for a coordinate transformation the geographical latitude ($\varphi_e$) of the location (P) is firstly determined from the approximate formula

$$\tan(\varphi_e) \approx \frac{Z(P)}{R(P)\cdot(1-e_1^2)} \; ,$$

where $R(P) = \sqrt{X^2(P) + Y^2(P)}$ , or $R(P) = \frac{X(P)}{\cos(\lambda)}$ or $R(P) = \frac{Y(P)}{\sin(\lambda)}$ ,
**in that** this geographical latitude ($\varphi_e$) is subsequently used to determine the ellipsoidal elevation ($h_E$) of the location (P) from the formula

$$h_E = \frac{R(P)}{\cos(\varphi_e)} - \frac{a}{\sqrt{1 - e_1^2\cdot\sin^2(\varphi_e)}} \; ,$$

and **in that** the elevation ($h_E$) determined from this formula is used to determine the more accurate latitude ($\varphi_e$) from the formula

$$\tan(\varphi_e) = Z(P) / \left[R(P)\cdot\left(1 - \frac{e_1^2\cdot a}{a + h_E\cdot\sqrt{1-e_1^2\cdot\sin^2(\varphi_e)}}\right)\right] \; .$$

3. Method according to one of the preceding claims, **characterized in that** the latitude $\varphi_e$ is determined using the approximate formula

**EP 0 762 269 B1**

$$\varphi_e \approx \arctan\left(\frac{Z(P)}{R(P)\cdot(1-e_1^2)}\right) \ .$$

given an accuracy of 0.193° required of the geographical latitude ($\varphi_e$) and for elevations $h_E$ less than 6 400 km and an accuracy of approximately $3\cdot h_E\cdot 10^{-8}$ degrees/m required of $\varphi_e$.

4.  Method according to one of the preceding claims, **characterized**

   -   **in that** the function $\tan(\varphi_e)$ is determined as a broken rational function of R(P) and Z(P) in accordance with the formula

$$\tan(\varphi_e) = \frac{\sum_{\nu,\mu,\kappa} a_{\nu\mu\kappa}\cdot R^\nu(P)\cdot Z^\mu(P)\cdot V^\kappa(P)}{\sum_{\nu,\mu,\kappa} b_{\nu\mu\kappa}\cdot R^\nu(P)\cdot Z^\mu(P)\cdot V^\kappa(P)} \ ,$$

where V(P) = R(P)/Z(P) and $a_{\nu\mu}$, $B_{\nu\mu k}$ are constant coefficients for a prescribable Earth's ellipsoid which are a function only of the first eccentricity $e_1$ thereof and the semimajor axis thereof,

   -   **in that** the number of the coefficients is fixed as a function of the required accuracy and,

   -   **in that** the ellipsoidal elevation $h_E$ is determined in accordance with the formula

$$h_E = \sum_V c_V(R(P),Z(P))\cdot \varphi_{e,}^V$$

$c_V$ being coefficients which are determined as a function of R(P), Z(P), $e_1$ and a.

5.  Method according to one of the preceding claims, **characterized**

   -   **in that** the geographical latitude $\varphi_e$ is determined as a broken rational function of R(P) and Z(P) in accordance with the formula

$$\varphi_e = \frac{\sum_{\nu,\mu,\kappa} \tilde{a}_{\nu\mu\kappa}\cdot R^\nu(P)\cdot Z^\mu(P)\cdot V^\kappa(P)}{\sum_{\nu,\mu,\kappa} \tilde{b}_{\nu\mu\kappa}\cdot R^\nu(P)\cdot Z^\mu(P)\cdot V^\kappa(P)} \ ,$$

where V(P) = R(P)/Z(P) and
where V(P) = R(P)/Z(P) and $\tilde{a}_{\nu\mu k}$, $\tilde{b}_{\nu\mu k}$ are constant coefficients for a prescribable Earth's ellipsoid which are a function only of the first eccentricity $e_1$ thereof and the semimajor axis a thereof,

   -   **in that** the number of the coefficients is fixed as a function of the required accuracy, and

12

- **in that** the ellipsoidal elevation $h_E$ is determined in accordance with the formula

$$h_E = \sum_V c_V (R(P), Z(P)) \cdot \varphi_{e,}^V$$

$c_v$ being coefficients which are determined as a function of $R(P)$, $Z(P)$, $e_1$ and a.

6. Method according to one of the preceding claims, **characterized in that** the calculation of the formula occurring is performed with the aid of the Horner scheme.

7. Method according to one of the preceding claims for use as coordinate converter.

8. Method according to one of the preceding claims for use as three-dimensional (3D) coordinate converter.

**Revendications**

1. Procédé pour l'ajustement d'un organe de réglage au moyen d'un dispositif de commande et/ou de régulation qui nécessite pour l'ajustement de la valeur de consigne des coordonnées qui sont disponibles sous la forme de coordonnées géographiques ($\lambda$, $\varphi_e$, $h_E$), dans lequel on a pour un point (P):

   $\lambda$ = longitude géographique du point,
   $\varphi_e$ = latitude géographique ellipsoïdale du point,
   $h_E$ = altitude ellipsoïdale du point, avec $h_E = h_{NN} + h_{GE}$, où
   $h_{NN}$ = niveau de la mer et
   $h_{GE}$ = altitude du géoïde (ondulation du géoïde) pour le point,

   dans lequel, au cas où les coordonnées sont disponibles sous la forme de coordonnées cartésiennes géocentriques ($X(P)$, $Y(P)$, $Z(P)$) du point (P), on en déduit les coordonnées géographiques correspondantes ($\lambda$, $\varphi_e$, $h_E$) suivant les formules

$$\lambda = \arctan\left(\frac{Y(P)}{X(P)}\right),$$

   avec $-\pi \leq \lambda \leq +\pi$;
   **caractérisé en ce que** l'altitude ellipsoïdale $h_E$ et la latitude géographique $\varphi_e$ sont calculées suivant les formules d'approximation

$$h_E \approx \sqrt{(1-e_1^2) \cdot R^2(P) + \frac{Z^2(P)}{1-e_1^2}} \cdot \left[1 - \frac{a}{\sqrt{R^2(P) + \frac{Z^2(P)}{1-e_1^2}}}\right] ;$$

$$\varphi_e \approx \arctan\left[\frac{Z(P)}{R(P) \cdot (1-e_1^2)} \cdot \left(1 - \frac{h_E \cdot e_1^2}{a \cdot (1-e_1^2)}\right)\right]$$

avec

R(P) = distance de l'origine des coordonnées (S) à la projection orthogonale du point (P) sur le plan de l'équateur,

$$e_1 = \frac{\sqrt{a^2 - b^2}}{a} = \text{première excentricité de l'ellipsoïde}$$

terrestre utilisé,

a = demi-grand axe de l'ellipsoïde terrestre, et
b = demi-petit axe de l'ellipsoïde terrestre.

2. Procédé suivant la revendication 1, **caractérisé en ce que**, pour une transformation de coordonnées, on détermine d'abord la latitude géographique ($\varphi_e$) du point (P) par la formule d'approximation

$$\tan(\varphi_e) \approx \frac{Z(P)}{R(P) \cdot (1 - e_1^2)},$$

avec $R(P) = \sqrt{X^2(P) + Y^2(P)}$, resp. $R(P) = \frac{X(P)}{\cos(\lambda)}$ ou $R(P) = \frac{Y(P)}{\sin(\lambda)}$,
**en ce que** l'on détermine ensuite, à partir de cette latitude géographique ($\varphi_e$), l'altitude ellipsoïdale ($h_E$) du point (P) par la formule

$$h_E = , \frac{R(P)}{\cos(\varphi_e)} - \frac{a}{\sqrt{1 - e_1^2 \cdot \sin^2(\varphi_e)}},$$

et **en ce que** l'on détermine enfin, à partir de l'altitude ($h_E$) déterminée par cette formule, la latitude ($\varphi_e$) plus précise par la formule

$$\tan(\varphi_e) = Z(P) / \left[ R(P) \cdot \left( 1 - \frac{e_1^2 \cdot a}{a + h_E \cdot \sqrt{1 - e_1^2 \cdot \sin^2(\varphi_e)}} \right) \right].$$

3. Procédé suivant l'une quelconque des revendications précédentes, **caractérisé en ce que**, pour une demande de précision de $0,193°$ sur la latitude géographique ($\varphi_e$) respectivement pour des altitudes $h_E$ inférieures à 6400 km et pour une demande de précision sur $\varphi_e$ d'environ $3 \cdot h_E \cdot 10^{-8}$ degré/m, la latitude $\varphi_e$ est déterminée par la formule d'approximation

$$\varphi_e \approx \arctan\left( \frac{Z(P)}{R(P) \cdot (1 - e_1^2)} \right).$$

4. Procédé suivant l'une quelconque des revendications précédentes, **caractérisé en ce que**

- la fonction $\tan(\varphi_e)$ est déterminée comme une fonction rationnelle fractionnaire de R(P) et Z(P) suivant la formule

$$\tan(\varphi_e) = \frac{\sum_{\nu,\mu,\varkappa} a_{\nu\mu\varkappa} \cdot R^\nu(P) \cdot Z^\mu(P) \cdot V^\varkappa(P)}{\sum_{\nu,\mu,\varkappa} b_{\nu\mu\varkappa} \cdot R^\nu(P) \cdot Z^\mu(P) \cdot V^\varkappa(P)} \quad ,$$

avec $V(P) = R(P)/Z(P)$ et $a_{\nu\mu\varkappa}$, $b_{\nu\mu\varkappa}$ qui sont des coefficients constants pour un ellipsoïde terrestre pouvant être spécifié, qui ne dépendent que de la première excentricité $e_1$ de celui-ci et du demi-grand axe a de celui-ci,

- **en ce que** le nombre des coefficients est fixé en fonction de la précision demandée, et

- **en ce que** l'altitude ellipsoïdale $h_E$ est déterminée suivant la formule

$$h_E = \sum_\nu c_\nu(R(P), Z(P)) \cdot \varphi_e^\nu \quad ,$$

dans laquelle $c_\nu$ sont des coefficients, qui sont déterminés en fonction de $R(P)$, $Z(P)$, $e_1$ et a.

5. Procédé suivant l'une quelconque des revendications précédentes, **caractérisé en ce que**

- la latitude géographique $\varphi_e$ est déterminée comme une fonction rationnelle fractionnaire de $R(P)$ et $Z(P)$ suivant la formule

$$\varphi_e = \frac{\sum_{\nu,\mu,\varkappa} \tilde{a}_{\nu\mu\varkappa} \cdot R^\nu(P) \cdot Z^\mu(P) \cdot V^\varkappa(P)}{\sum_{\nu,\mu,\varkappa} \tilde{b}_{\nu\mu\varkappa} \cdot R^\nu(P) \cdot Z^\mu(P) \cdot V^\varkappa(P)} \quad ,$$

avec $V(P) = R(P)/Z(P)$ et $\tilde{a}_{\nu\mu\varkappa}$, $\sim b_{\nu\mu\varkappa}$ qui sont des coefficients constants pour un ellipsoïde terrestre pouvant être spécifié, qui ne dépendent que de la première excentricité $e_1$ de celui-ci et du demi-grand axe a de celui-ci,

- **en ce que** le nombre des coefficients est fixé en fonction de la précision demandée, et

- **en ce que** l'altitude ellipsoïdale $h_E$ est déterminée suivant la formule

$$h_E = \sum_\nu c_\nu(R(P), Z(P)) \cdot \varphi_e^\nu \quad ,$$

dans laquelle $c_\nu$ sont des coefficients, qui sont déterminés en fonction de $R(P)$, $Z(P)$, $e_1$ et a.

6. Procédé suivant l'une quelconque des revendications précédentes, **caractérisé en ce que** le calcul des polynômes obtenus est effectué à l'aide du schéma de Horner.

7. Procédé suivant l'une quelconque des revendications précédentes, pour l'utilisation comme convertisseur de coordonnées.

8. Procédé suivant l'une quelconque des revendications précédentes, pour l'utilisation comme convertisseur de coordonnées tridimensionnelles (3D).

FIG. 1

FIG. 2